# EUROPÄISCHE PATENTSCHRIFT

(11) **EP 3 303 804 B1**
(45) Veröffentlichungstag und Bekanntmachung des Hinweises auf die Patenterteilung: **03.04.2019**
(21) Anmeldenummer: 16736757.2
(22) Anmeldetag: 04.05.2016
(51) Int. Cl.: F02D 41/00, F02B 19/12, F02D 19/02, F02D 19/06

(54) **BRENNKRAFTMASCHINE**
INTERNAL COMBUSTION ENGINE
MOTEUR À COMBUSTION INTERNE

(30) Priorität: 26.05.2015 AT 3282015
(43) Veröffentlichungstag der Anmeldung: 11.04.2018
(73) Patentinhaber: GE Jenbacher GmbH & Co. OG, 6200 Jenbach (AT)
(72) Erfinder: FUCHS, Jochen, 6112 Wattens (AT)
(74) Vertreter: Coric, Dragan
(86) Internationale Anmeldenummer: PCT/AT2016/050124
(87) Internationale Veröffentlichungsnummer: WO 2016/187628

(56) Entgegenhaltungen:
- WO-A1-2008/106722
- DE-A1- 4 419 429
- DE-A1-102007 060 560
- FR-A1- 2 893 673
- JP-A- H09 158 729
- JP-A- 2003 278 548

## Beschreibung

Die vorliegende Erfindung betrifft eine Brennkraftmaschine mit den Merkmalen des Oberbegriffs des Anspruchs 1 und ein Verfahren mit den Merkmalen des Oberbegriffs des Anspruchs 6.

Es ist bekannt, Brennkraftmaschinen, insbesondere Gasmotoren, bis zu einem Hubvolumen von ca. 3 Litern als Direktzünder auszuführen. Bei Direktzündern entflammt eine in den Hauptbrennraum ragende Zündkerze direkt das im Hauptbrennraum vorliegende Gas-Luft-Gemisch. Der Nachteil von Direktzündern ist, dass die Qualität der Entflammung des Gas-Luft-Gemisches vollständig von der Zündkerze abhängt. Selbst geringer Verschleiß der Zündkerze macht sich durch Zyklusschwankungen (Schwankungen der Schwerpunktlage der Verbrennung) bemerkbar. Für einen Betrieb mit maximalem Wirkungsgrad ist es jedoch wichtig, die Brennkraftmaschine möglichst nahe an der Klopfgrenze zu betreiben. Sind jedoch Zyklusschwankungen zu berücksichtigen, muss die Brennkraftmaschine mit größerem Abstand von der Klopfgrenze und damit mit verringertem Wirkungsgrad betrieben werden. Bei solchen Brennkraftmaschinen, die also keine Vorkammern aufweisen, ist es üblich durch Verwendung speziell ausgebildeter Zündkerzen, Kolben (beispielsweise Muldenkolben) und eines speziellen Zylinderkopfes sowie durch Schließen des Einlassventils nachdem der Kolben seinen unteren Totpunkt verlassen hat (spätes Miller- oder Atkinson-Verfahren) eine Verwirbelung der Ladung im Hauptbrennraum und so eine homogenere Verbrennung zu erzielen.

Es ist außerdem bekannt, bei mit Vorkammern versehenen Brennkraftmaschinen (meist ab einem Hubvolumen von ca. 3 Litern) die Vorkammern mit reinem Gas oder einem sehr fetten Gas-Luft-Gemisch (Lambda etwa gleich 1,1) zu spülen, damit das in der Vorkammer vorliegende Gemisch gut entflammbar ist. Zum Zündzeitpunkt stellt sich in der Vorkammer dann ein Lambda von etwa 1,0 bis 1,1 ein. Man spricht hier von gasgespülten Vorkammern. Das Verhältnis des Volumens der Vorkammer zum Volumen des Hauptbrennraums im oberen Totpunkt (Kompressionsvolumen) beträgt bei solchen Vorkammermotoren häufig ca. 1 %.

Gasgespülte Vorkammern weisen üblicherweise eine von der Versorgung der Hauptbrennräume separate Brenngasversorgung auf. Diese Brenngasversorgung enthält zumeist einen Vorkammergaskompressor, welcher dazu dient, das für die Vorkammer bestimmte Brenngas auf Ladedruckniveau und größer zu bringen, um ein positives Druckgefälle über das Vorkammergasventil (zumeist ein Rückschlagventil) zu erzeugen. Die Kosten für den Vorkammergaskompressor und die Vorkammergasregelstrecke sind erheblich, sodass diese Technologie für kleinere Gasmotoren (mit einem Hubvolumen von ca. bis zu 3 Litern) nicht eingesetzt wird.

Weiters ist es bekannt ein Einlassventil zu schließen, bevor ein Kolben im Ansaugtakt seinen unteren Totpunkt erreicht hat (frühes Miller-Verfahren).

In FR 2 893 673 A1 ist ein Motor mit einem Zylinderblock beschrieben, der eine Brennkammer bildet, in die ein Luftansaugkanal austritt. Eine Zündkerze ragt in eine Vorkammer, die seitlich von einer Wand begrenzt ist, hinein. Der Luftansaugkanal hat einen oberen Kanalteil, der direkt in die Vorbrennkammer zum Zuführen von Frischluft mündet. Die Wand hat eine Biegung zum Erzeugen einer Wirbelbewegung von Frischgasgemisch, das der Kammer zugeführt wird. Eine Mehrfachstrahldüse weist Düsen auf, die den jeweiligen Kammern Brennstoff zuführen.

In WO 2008/106722 A1 wird ein Motor vorgeschlagen, der eine wasserstoffunterstützte Verbrennung eines Wasserstoffgas enthaltenden Brennstoffs verwendet. Der Motor weist eine Kraftstoffeinleitvorkammer auf, in die mindestens ein Teil des Wasserstoffgas enthaltenden Kraftstoffs eingeleitet wird. Beim Betrieb des Motors wird der Wasserstoffgas enthaltende Kraftstoff der Vorkammer, die mit der Hauptbrennkammer in Fluidverbindung steht, zugeführt. Der Kraftstoff zündet in der Vorkammer. Die Zuführung des wasserstoffhaltigen Kraftstoffs in die Vorkammer des Kraftstoffsystems des Motors ermöglicht es, dass eine reduzierte Menge an Wasserstoffgas enthaltendem Kraftstoff benötigt wird.

Aufgabe der Erfindung ist die Bereitstellung einer gattungsgemäßen Brennkraftmaschine und eines gattungsgemäßen Verfahrens, bei welchen auch ohne die speziellen Ausbildungen von Zündkerze, Kolben und Zylinderkopf eine homogene und sehr schnelle Verbrennung erzielt werden kann.

Diese Aufgabe wird durch eine Brennkraftmaschine mit den Merkmalen des Anspruchs 1 und ein Verfahren mit den Merkmalen des Anspruchs 7 gelöst. Vorteilhafte Ausführungsformen sind in den abhängigen Ansprüchen definiert.

Gemäß der Erfindung ist also vorgesehen, dass das Vorkammergasventil mit einer Quelle für ein Gas-Luft-Gemisch verbunden ist und die Vorkammerladung aus einem Gas-Luft-Gemisch mit einem Lambda größer 1,2, bevorzugt größer 1,5, besonders bevorzugt als 1,7 besteht und dass der Aktuator derart konfiguriert ist, dass das Einlassventil schließt, bevor der Kolben die untere Totpunktlage erreicht. Das Verhältnis eines Volumens der Vorkammer zu einem Kompressionsvolumen des Hauptbrennraums im oberen Totpunkt liegt in einem Bereich von 1% bis 5%.

Beispiele für die Aktuatoren der Ein- und Auslassventiles sind eine Nockenwelle oder hydraulische Vorrichtungen. Gemeint ist der untere Totpunkt im Ansaugtakt.

Ein stöchiometrisches Verhältnis von Gas zu Luft ergibt ein Lambda von 1. Ein Luftüberschuss (mageres Gemisch) ergibt ein Lambda größer 1. Unter "Gas" im Gas-Luft-Gemisch wird ein Brenngas verstanden, beispielsweise Erdgas.

Normalerweise weist die Ladung in der Vorkammer ein stöchiometrisches Lambda oder allenfalls ein leicht erhöhtes Lambda auf, da ja diese Ladung zur Erzeugung eines intensiven Zündimpulses dient. Die gezündete Ladung der Vorkammer tritt in Form von Zündfackeln über Übertrittsbohrungen in den Hauptbrennraum und entzündet das dort vorliegende magere Gas-Luft-Gemisch.

Die Erfindung wählt die an sich paradoxe Maßnahme, die Vorkammer mit einem sehr mageren Gas-Luft-Gemisch (Lambda größer als 1,2, bevorzugt größer als 1,5, besonders bevorzugt größer als 1,7) zu laden und diese Maßnahme mit einem frühen Miller-Verfahren (bzw. Atkinson-Verfahren) zu kombinieren.

Überraschenderweise kann so die Vorkammer auf eine Weise verwendet werden, die aufgrund der in den Hauptbrennraum eintretenden Fackeln eine Homogenisierung der Verbrennung des im Hauptbrennraum befindlichen Gemisches erzeugt, welche im Stand der Technik bei Direktzündern nur durch die oben beschriebenen aufwendigen konstruktiven Maßnahmen (Muldenkolben etc.) möglich war. Das frühe Miller-Verfahren stellt ein vollständiges Ausspülen der Vorkammer durch den sich noch zurückziehenden Kolben sicher.

Somit kann beispielsweise auf speziell ausgestaltete Kolben, wie etwa Muldenkolben verzichtet werden und stattdessen, erfindungsgemäß ein Flachkolben eingesetzt werden. Flachkolben neigen weniger zum Aufbau von Ablagerungen und sind leichter zu reinigen als Muldenkolben.

Das Verhältnis eines Volumens der Vorkammer zu dem Volumen des Hauptbrennraums im oberen Totpunkt (dem Kompressionsvolumen) liegt in einem Bereich von 1% bis 5 %, bevorzugt in einem Bereich von 2 % bis 4 %. Die Wahl einer gegenüber dem Stand der Technik unüblich großen Vorkammer bewirkt, dass trotz des mageren Gemisches in der Vorkammer dennoch genügend chemische Energie für den Zündimpuls zur Entflammung des Hauptbrennraums zur Verfügung steht.

Durch die Erfindung wird erreicht, dass auch kleinere Gasmotoren (bis etwa einem Hubvolumen pro Zylinder von etwa 3 Litern), die üblicherweise nicht mit einer Vorkammer ausgestattet werden, mit einer gegenüber gasgespülten Vorkammern vergleichsweise günstigen Vorkammerzündung ausgestattet werden können.

Dies bewirkt, dass die solchermaßen ausgestatteten kleineren Gasmotoren einen gegenüber dem Stand der Technik verbesserten Wirkungsgrad erzielen. Zyklusschwankungen sind reduziert und die Brennkraftmaschine kann näher an der Klopfgrenze betrieben werden.

Bevorzugt wird die Quelle für das Gas-Luft-Gemisch durch einen Ansaugkanal des Hauptbrennraumes gebildet und es ist eine Verbindungsleitung zwischen dem Ansaugkanal und dem Vorkammergasventil vorgesehen. Damit kann die Vorkammer mit dem im Ansaugkanal vorliegenden Gas-Luft-Gemisch versorgt werden. Ein aufwendiges Vorkammergasversorgungssystem mit Vorkammergaskompressor etc. ist somit nicht erforderlich, da das Gemisch direkt aus dem Ansaugkanal entnommen wird.

Besonders bevorzugt ist vorgesehen, dass die Verbindungsleitung als Hohlraum im Zylinderkopf ausgebildet ist und vorzugsweise eine Temperiervorrichtung für die Verbindungsleitung vorgesehen ist. Indem die Verbindungsleitung direkt im Zylinderkopf ausgebildet ist, kann die Leitung bei der Herstellung des Zylinderkopfs angelegt werden.

Alternativ dazu kann die Verbindungsleitung als vom Zylinderkopf baulich getrennte Zweigleitung ausgeführt sein.

Die Temperiervorrichtung ist vorgesehen, um die Verbindungsleitung auf einer Temperatur zu halten, bei welcher ein Auskondensieren des Gas-Luft-Gemisches verhindert wird.

Ist die Verbindungsleitung als Hohlraum im Zylinderkopf ausgebildet, kann auf einfache Weise Motorkühlwasser zur Vorwärmung des Gas-Luft-Gemisches in der Verbindungsleitung genutzt werden.

Bevorzugt ist vorgesehen, dass die Brennkraftmaschine als stationärer Gas-Motor ausgebildet ist, der vorzugsweise mit einem Generator zur Stromerzeugung koppelbar oder gekoppelt ist.

Die Erfindung wird anhand der Figuren näher erläutert. Es zeigen:
- Fig. 1: eine schematische Darstellung der für die Erfindung relevanten Teile einer erfindungsgemäßen Brennkraftmaschine,
- Fig. 2: Verlauf des sich beim erfindungsgemäßen Verfahren einstellenden Druckes im Hauptbrennraum und des im Ansaugkanal vorherrschenden Ladedruckes (oberes Diagramm)
Ventilerhebungskurven für unterschiedliche Einlassventil-Steuerzeiten (mittleres Diagramm)
Differenzdruck zwischen dem Druck in der Vorkammer und dem Druck im Ansaugkanal, d.h. Vorkammerdifferenzdruck (unteres Diagramm), jeweils über dem Kurbelwellenwinkel.

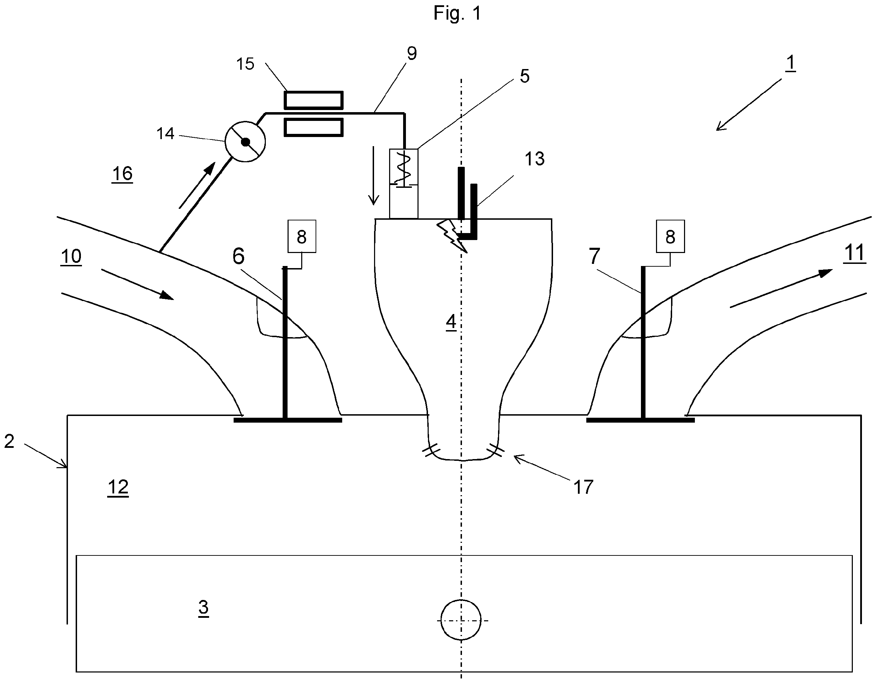

In Figur 1 erkennt man einen Zylinder 2 in welchem ein Kolben 3 auf- und abbewegbar angeordnet ist, wobei zwischen dem Kolben 3 und Zylinder 2 ein Hauptbrennraum 12 ausgebildet ist. An seinem oberen Totpunkt bildet der Kolben 3 mit dem Zylinder 2 das sogenannte Kompressionsvolumen.

Ein Ansaugkanal 10 ist durch ein Einlassventil 6 und ein Auslasskanal 11 ist durch ein Auslassventil 7 gegenüber dem Hauptbrennraum 12 verschließbar.

Eine Vorkammer 4 steht über Überströmbohrungen 17 mit dem Hauptbrennraum 12 in Verbindung und weist eine Zündquelle 13 und ein als Rückschlagventil ausgebildetes Vorkammergasventil 5 auf, welches mit einer Quelle für ein Gas-Luft-Gemisch verbunden ist. In diesem Ausführungsbeispiel dient der Ansaugkanal 11 selbst als diese Quelle und es ist eine im Zylinderkopf 15 als Hohlraum ausgebildete Verbindungsleitung 9 zum Vorkammergasventil 5 vorgesehen. Zur Mengenregelung des der Vorkammer 4 zuführbaren Gas-Luft-Gemisches ist in diesem Ausführungsbeispiel eine einstellbare Drossel in der Verbindungsleitung 9 angeordnet.

Weiters ist eine Temperiervorrichtung 15 in Form einer Vorwärmung durch Motorkühlwasser vorgesehen, um die Verbindungsleitung 9 auf einer Temperatur zu halten, bei welcher ein Auskondensieren des Gas-Luft-Gemisches verhindert wird.

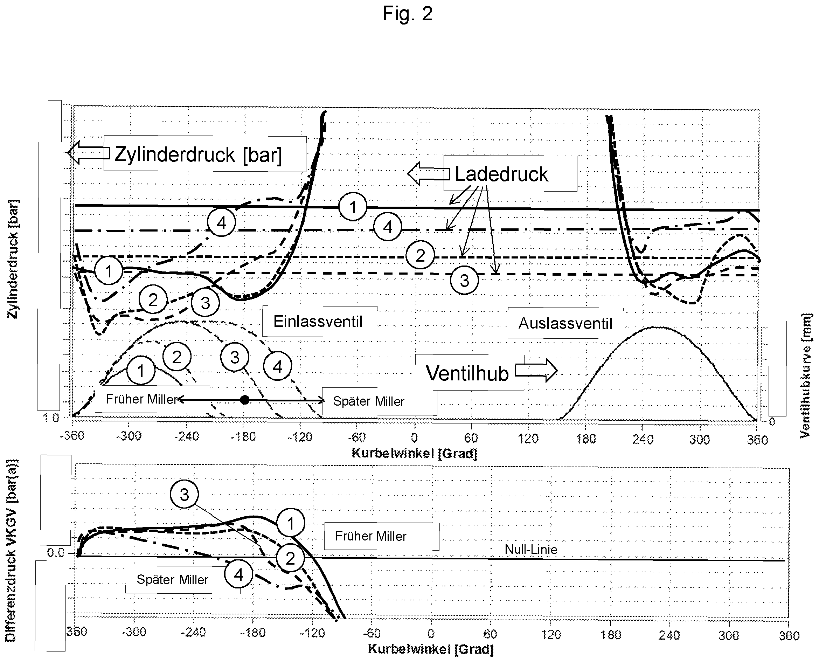

Figur 2 zeigt im oberen Teil des Diagramms den Zylinderdruckverlauf für verschiedene Einlassventilsteuerzeiten.

Darunter gezeigt sind die Ventilerhebungskurven der Ein- und Auslassventile für verschiedene Einlassventilsteuerzeiten.

Im Diagramm darunter ist der Verlauf des Differenzdruckes über das Vorkammergasventil über den Kurbelwinkel dargestellt.

Die Kurvenscharen sind wie folgt zu unterscheiden:
- Kurven "1" bezeichnen die Druckverläufe für das früheste Einlassventil-Schließen ("früher Miller")
- Kurven "2" bezeichnen die Druckverläufe für ein späteres Einlassventil-Schließen als Kurven "1"
- Kurven "3" bezeichnen die Druckverläufe für ein späteres Einlassventil-Schließen als Kurven "2". Es ist dies die füllungsoptimierte Ventilhubkurve, gekennzeichnet durch den geringsten aufzuwendenden Ladedruck bei gleicher Motorleistung.
- Kurven "4" bezeichnen die Druckverläufe für ein späteres Einlassventil-Schließen als Kurven "3" ("später Miller")

Die verschiedenen Einlassventilerhebungskurven 1 bis 4 sind in den Ventilhubkurven in mm dargestellt. Die Reihenfolge ist 1, 2, 3, 4.

An die Einlassventilsteuerzeiten angepasst ist der Ladedruck. Die angepassten Ladedrücke sind darüber als Ladedrücke 1 bis 4 dargestellt, wobei der höchste Ladedruck für die Ventilsteuerzeiten "1" aufgebracht wird. Es folgt als zweithöchster Ladedruck der zu den Ventilsteuerzeiten "4" aufgebrachte. Der nächsthöchste Ladedruck ist der zu den Ventilsteuerzeiten "2" aufgebrachte. Der niedrigste Ladedruck wird für die Ventilsteuerzeiten "3" aufgebracht. Die Reihenfolge der Ladedrücke von hoch zu niedrig ist also 1, 4, 2, 3.

Die resultierenden Zylinderdruckverläufe sind wieder mit den Zahlen 1 bis 4 markiert.

Im Diagramm darunter sind die Verläufe des Differenzdruckes zwischen Ladedruck (das heißt dem im Ansaugkanal 10 anliegenden Druck) und Druck in der Vorkammer 4 über den Kurbelwinkel für die verschiedenen Ventilsteuerzeiten 1 bis 4 dargestellt und mit den Zahlen 1 bis 4 markiert.

Ein positiver Differenzdruck (über der Null-Linie) bedeutet, dass der Druck im Ansaugkanal 10 (Ladedruck) größer als der Druck in der Vorkammer 4 ist und somit Gas-Luft-Gemisch aus dem Ansaugkanal über das Vorkammergasventil in die Vorkammer einströmen kann. Der Differenzdruck muss natürlich darüber hinaus noch die Federkraft des als Rückschlagventil ausgebildeten Vorkammergasventils 5 überwinden, also dementsprechend größer als Null sein.

Die Fläche unter der Differenzdruckkurve (zwischen der Differenzdruckkurve und der Null-Linie) ist proportional zur Menge an in die Vorkammer 4 eingeströmtem Gas-Luft-Gemisch in einem Arbeitstakt.

Erkennbar ist, dass bei frühen Einlassventilschließzeiten ("früher Miller") wesentlich mehr Gas-Luft-Gemisch in die Vorkammer 4 einströmt als bei den sonst für Brennkraftmaschinen dieser Gattung üblichen späten Einlassventilschließzeiten ("später Miller").

Damit wird erreicht, dass auch bei Verwendung eines mageren Gas-Luft-Gemisches aus dem Ansaugkanal 10 der Brennkraftmaschine 1 dieselbe chemische Energie in die Vorkammer 4 einbringbar ist wie sonst nur durch die Verwendung eines fetten Gas-Luft-Gemisches zur Spülung der Vorkammer (d.h. bei einer gasgespülten Vorkammer).

Zudem wird vor dem nächsten Verbrennungszyklus Restgas aus der Vorkammer wirkungsvoll herausgespült.

Im Verbindungskanal 9 kann in einer Variante eine einstellbare Drossel vorgesehen sein, über welche die zugeführte Menge reguliert und gegebenenfalls reduziert werden kann.

### Liste der verwendeten Bezugszeichen:

- 1: Brennkraftmaschine
- 2: Zylinder
- 3: Kolben
- 4: Vorkammer
- 5: Vorkammergasventil
- 6: Einlassventil
- 7: Auslassventil
- 9: Verbindungsleitung
- 10: Ansaugkanal
- 11: Auslasskanal
- 12: Hauptbrennraum
- 13: Zündquelle
- 14: Drossel
- 15: Temperiervorrichtung
- 16: Zylinderkopf
- 17: Überströmbohrung(en)

## Patentansprüche

1. Brennkraftmaschine, mit einem Zylinderkopf (1) und wenigstens einer Kolben-ZylinderEinheit, in welcher in einem Zylinder (2) ein Kolben (3) zwischen einer unteren und einer oberen Totpunktlage bewegbar ist, wobei im Zylinder (2) durch den Kolben (3) und den Zylinderkopf (16) ein Hauptbrennraum (12) ausgebildet ist, der mit einer Vorkammer (4) in Verbindung steht, die ein Vorkammergasventil (5) aufweist und wobei Ein- und Auslassventile (6, 7) des Hauptbrennraums (12) durch einen Aktuator (8) betätigt sind, wobei das Vorkammergasventil (5) mit einer Quelle für ein Gas-Luft-Gemisch verbunden ist und der Aktuator (8) derart konfiguriert ist, dass das Einlassventil (6) schließt, bevor der Kolben (3) die untere Totpunktlage erreicht, wobei der Koben (3) als ein Flachkolben ausgeführt ist, **dadurch gekennzeichnet, dass** die Vorkammerladung aus einem Gas-Luft-Gemisch mit einem Lambda größer als 1,2 besteht und das Verhältnis eines Volumens der Vorkammer (4) zu einem Kompressionsvolumen des Hauptbrennraums (12) im oberen Totpunkt in einem Bereich von 1% bis 5% liegt.

2. Brennkraftmaschine nach Anspruch 1, wobei das Verhältnis eines Volumens der Vorkammer (4) zu einem Kompressionsvolumen des Hauptbrennraums (12) im oberen Totpunkt in einem Bereich von 2 % bis 4 % liegt.

3. Brennkraftmaschine nach Anspruch 1 oder 2, wobei die Vorkammerladung aus einem Gas-Luft-Gemisch mit einem Lambda größer als 1,5, bevorzugt größer als 1,7 besteht.

4. Brennkraftmaschine nach einem der vorangehenden Ansprüche, wobei die Quelle für das Gas-Luft-Gemisch der Vorkammer (4) durch einen Ansaugkanal (10) des Hauptbrennraumes gebildet wird und eine Verbindungsleitung (9) zwischen dem Ansaugkanal (10) und dem Vorkammergasventil (5) vorgesehen ist.

5. Brennkraftmaschine nach Anspruch 4, wobei die Verbindungsleitung (9) als Hohlraum im Zylinderkopf (1) ausgebildet ist und vorzugsweise eine Temperiervorrichtung (15) für die Verbindungsleitung (9) vorgesehen ist.

6. Brennkraftmaschine nach wenigstens einem der vorangehenden Ansprüche, wobei die Brennkraftmaschine als stationärer Gas-Motor ausgebildet ist, der vorzugsweise mit einem Generator zur Stromerzeugung koppelbar oder gekoppelt ist.

7. Verfahren zum Betreiben einer Brennkraftmaschine, die eine Vorkammer (4) und einen durch einen Kolben (3), welcher als Flachkolben ausgeführt ist, mitgebildeten Hauptbrennraum aufweist, und ein Einlassventil (6) des mit der Vorkammer (4) in Verbindung stehenden Hauptbrennraums (12) in einem frühen Millerverfahren betrieben wird, **dadurch gekennzeichnet, dass** die Vorkammer (4) mit einem Gas-Luft-Gemisch mit einem Lambda größer als 1,2 geladen wird und das Verhältnis eines Volumens der Vorkammer (4) zu einem Kompressionsvolumen des Hauptbrennraums (12) im oberen Totpunkt in einem Bereich von 1% bis 5% liegt.

## Claims

1. Internal combustion engine, having a cylinder head (1) and at least one piston-cylinder unit in which a piston (3) is able to be moved between a lower and an upper dead centre position in a cylinder (2), wherein a main combustion chamber (12) is formed in the cylinder (2) by the piston (3) and the cylinder head (16), said combustion chamber being connected to a pre-chamber (4) which has a pre-chamber gas valve (5) and wherein inlet and outlet valves (6, 7) of the main combustion chamber (12) are actuated by an actuator (8), wherein the pre-chamber gas valve (5) is connected to a source for a gas-air mixture and the actuator (8) is configured in such a way that the inlet valve (6) closes before the piston (3) reaches the lower dead centre position, wherein the piston (3) is implemented as a flat piston, **characterised in that** the pre-chamber load consists of a gas-air mixture having a lambda greater than 1.2 and the ratio of a volume of the pre-chamber (4) to a compression volume of the main combustion chamber (12) in the upper dead centre ranges from 1% to 5%.

2. Internal combustion chamber according to claim 1, wherein the ratio of a volume of the pre-chamber (4) to a compression volume of the main combustion chamber (12) in the upper dead centre ranges from 2% to 4%.

3. Internal combustion chamber according to claim 1 or 2, wherein the pre-chamber load consists of a gas-air mixture having a lambda greater than 1.5, preferably greater than 1.7.

4. Internal combustion engine according to one of the preceding claims, wherein the source for the gas-air mixture of the pre-chamber (4) is formed by an intake channel (10) of the main combustion chamber and a connection line (9) is provided between the intake channel (10) and the pre-chamber gas valve (5).

5. Internal combustion engine according to claim 4, wherein the connection line (9) is formed as a cavity in the cylinder head (1) and preferably a tempering device (15) for the connection line (9) is provided.

6. Internal combustion engine according to at least one of the preceding claims, wherein the internal combustion engine is formed as a stationary gas motor which preferably is able to be coupled or is coupled to a generator to generate power.

7. Method to operate an internal combustion engine which has a pre-chamber (4) and a main combustion chamber formed by a piston (3) which is implemented as a flat piston, and an inlet valve (6) of the main combustion chamber (12) connected to the pre-chamber (4) is operated in an early Miller method, **characterised in that** the pre-chamber (4) is loaded with a gas-air mixture having a lambda greater than 1.2 and the ratio of a volume of the pre-chamber (4) to a compression volume of the main combustion chamber (12) in the upper dead centre ranges from 1% to 5%.

## Revendications

1. Moteur à combustion interne, avec une tête de cylindre (1) et au moins une unité piston-cylindre, dans laquelle un piston (3) est mobile entre une position de point mort bas et une position de point mort haut dans un cylindre (2), dans lequel un espace de combustion principal (12) est réalisé dans le cylindre (2) par le piston (3) et la tête de cylindre (16), lequel est en liaison avec une préchambre (4) qui présente une soupape de gaz de préchambre (5) et dans lequel des soupapes d'entrée et de sortie (6, 7) de l'espace de combustion principal (12) sont actionnées par un actionneur (8), dans lequel la soupape de gaz de préchambre (5) est raccordée à une source pour un mélange gaz-air et l'actionneur (8) est configuré de telle manière que la soupape d'entrée (6) se ferme, avant que le piston (3) n'atteigne la position de point mort bas, dans lequel le piston (3) est réalisé en tant que piston plat, **caractérisé en ce que** la charge de préchambre se compose d'un mélange gaz-air avec un lambda supérieur à 1,2 et le rapport entre un volume de la préchambre (4) et un volume de compression de l'espace de combustion principal (12) dans le point mort haut se trouve dans une plage de 1 % à 5%.

2. Moteur à combustion interne selon la revendication 1, dans lequel le rapport entre un volume de la préchambre (4) et un volume de compression de l'espace de combustion principal (12) dans le point mort haut se trouve dans une plage de 2 % à 4%.

3. Moteur à combustion interne selon la revendication 1 ou 2, dans lequel la charge de préchambre se compose d'un mélange gaz-air avec un lambda supérieur à 1,5, de préférence supérieure à 1,7.

4. Moteur à combustion interne selon l'une quelconque des revendications précédentes, dans lequel la source pour le mélange gaz-air de la préchambre (4) est formée par un canal d'aspiration (10) de l'espace de combustion principal et une conduite de raccordement (9) est prévue entre le canal d'aspiration (10) et la soupape de gaz de préchambre (5).

5. Moteur à combustion interne selon la revendication 4, dans lequel la conduite de raccordement (9) est réalisée en tant qu'espace creux dans la tête de cylindre (1) et de préférence un dispositif de régulation de température (15) est prévu pour la conduite de raccordement (9).

6. Moteur à combustion interne selon au moins l'une quelconque des revendications précédentes, dans lequel le moteur à combustion interne est réalisé en tant que moteur à gaz stationnaire, lequel est accouplé ou peut être accouplé de préférence avec un générateur pour la génération de courant.

7. Procédé de fonctionnement d'un moteur à combustion interne qui présente une préchambre (4) et un espace de combustion principal formé conjointement par un piston (3) qui est réalisé en tant que piston plat, et une soupape d'entrée (6) de l'espace de combustion principal (12) se trouvant en liaison avec la préchambre (4) est actionnée dans un procédé de Miller précoce, **caractérisé en ce que** la préchambre (4) est chargée avec un mélange gaz-air avec un lambda supérieur à 1,2 et le rapport entre un volume de la préchambre (4) et un volume de compression de l'espace de combustion principal (12) dans le point mort haut se trouve dans une plage de 1 % à 5 %.
